(19) **Europäisches Patentamt European Patent Office Office européen des brevets**

(11) **EP 4 575 390 B1**

(12) **FASCICULE DE BREVET EUROPEEN**

(45) Date de publication et mention de la délivrance du brevet:
**27.05.2026 Bulletin 2026/22**

(21) Numéro de dépôt: **24220223.2**

(22) Date de dépôt: **16.12.2024**

(51) Classification Internationale des Brevets (IPC):
**G01B 17/00** *(2006.01)* **G01B 17/04** *(2006.01)*

(52) Classification Coopérative des Brevets (CPC):
**G01B 17/00; G01B 17/04**

(54) **PROCÉDÉ ET SYSTÈME DE MESURE D'UNE VARIATION DE DIMENSION D'UNE PIÈCE MÉCANIQUE**

VERFAHREN UND SYSTEM ZUR MESSUNG EINER ABMESSUNGSÄNDERUNG EINES MECHANISCHEN TEILS

METHOD AND SYSTEM FOR MEASURING A VARIATION IN THE DIMENSION OF A MECHANICAL PART

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.12.2023 FR 2314667**

(43) Date de publication de la demande:
**25.06.2025 Bulletin 2025/26**

(73) Titulaire: **Commissariat à l'Energie Atomique et aux Energies Alternatives
75015 Paris (FR)**

(72) Inventeurs:
- **GARRAUD, Nicolas**
  38054 GRENOBLE CEDEX 09 (FR)
- **MARIANNE, Julien**
  38054 GRENOBLE CEDEX 09 (FR)
- **ALESSANDRI, Baptiste**
  38054 GRENOBLE CEDEX 09 (FR)
- **CABANILLAS, Esteban**
  38054 GRENOBLE CEDEX 09 (FR)
- **BURLET, Jean-Yves**
  38054 GRENOBLE CEDEX 09 (FR)

(74) Mandataire: **Atout PI Laplace
Immeuble Up On
25 Boulevard Romain Rolland
CS 40072
75685 Paris Cedex 14 (FR)**

(56) Documents cités:
**US-A- 4 899 591**

- **SHAO JUNHUA ET AL: "Bolt Looseness Detection Based on Piezoelectric Impedance Frequency Shift", APPLIED SCIENCES, vol. 6, no. 10, 15 October 2016 (2016-10-15), pages 298, XP093185915, ISSN: 2076-3417, DOI: 10.3390/app6100298**
- **JOSHI S G ET AL: "Ultrasonic instrument for measuring bolt stress", ULTRASONICS, IPC SCIENCE AND TECHNOLOGY PRESS LTD. GUILDFORD, GB, vol. 22, no. 6, 1 November 1984 (1984-11-01), pages 261 - 269, XP024647485, ISSN: 0041-624X, [retrieved on 19841101], DOI: 10.1016/0041-624X(84)90043-X**
- **CABANILLAS ESTEBAN ET AL: "Ultrasonic Sensor for Pipe Joint Make-up Assessment", 2023 IEEE SENSORS, IEEE, 29 October 2023 (2023-10-29), pages 1 - 4, XP034477024, DOI: 10.1109/SENSORS56945.2023.10325132**

**Description**

L'invention se situe dans le domaine du contrôle non destructif par ultrasons. Elle s'applique en particulier, mais pas exclusivement, à la mesure du serrage de systèmes de fixations vissés lors de l'assemblage industriel de pièces.

Il est connu d'utiliser des techniques acoustiques pour mesurer de façon précise et dynamique le serrage des systèmes de fixation vissés lors de l'assemblage industriel de pièces par une méthode acoustique.

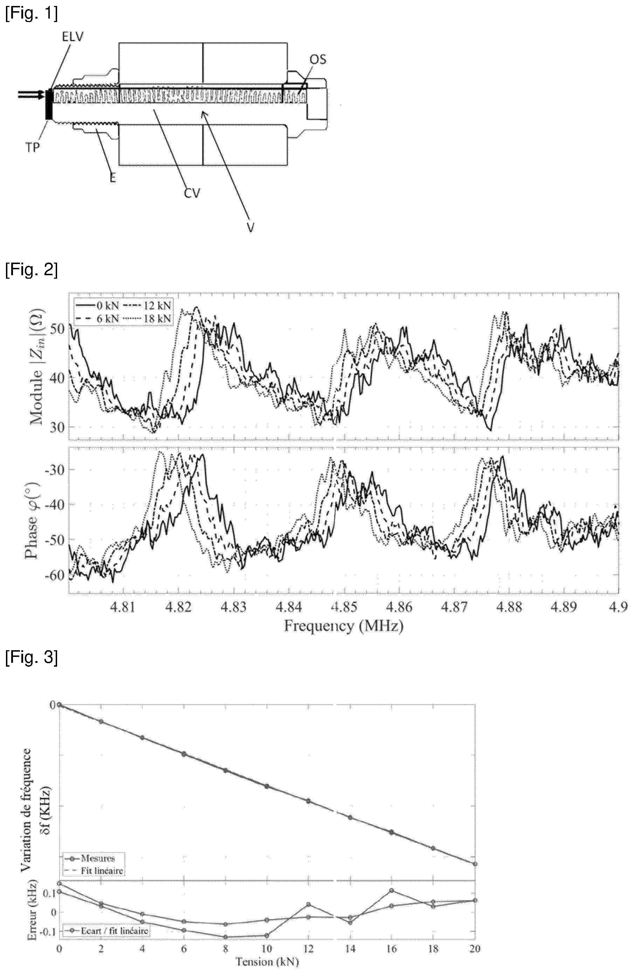

Comme illustré sur la [Fig. 1], cela peut être obtenu en fixant à une extrémité ELV d'un moyen de fixation (vis) V un transducteur piézoélectrique TP et en l'excitant grâce à une tension sinusoïdale. Le transducteur génère, dans le corps CV du moyen de fixation, des ondes acoustiques stationnaires OS qui s'établissent dans la structure en fonction de la longueur de celle-ci. A leur tour, ces ondes acoustiques modifient l'impédance du transducteur piézoélectrique TP, qui peut être mesurée en même temps que ce dernier est excité. Si on représente la phase et le module de l'impédance complexe du transducteur en fonction de la fréquence, on peut observer des pics en correspondance des fréquences de résonance acoustique de la structure.

Au fur et à mesure que le système de fixation est tendu (par exemple, en vissant un écrou E), sa longueur change, et avec elle ses fréquences de résonance. On observe alors un décalage fréquentiel des pics de l'impédance du transducteur. Cela est illustré sur la [Fig. 2], dans laquelle 4 courbes d'impédance - correspondant à des tensions de 0, 6 kN, 12 kN et 18 kN - sont superposées. La [Fig. 3] montre que la relation entre la tension appliquée et le décalage fréquentiel δf des pics d'impédance est sensiblement linéaire, avec une erreur de l'ordre de 1% (les deux courbes dans la partie inférieure correspondent à l'écart par rapport à une relation linéaire lors de la mise sous tension et son relâchement).

Le serrage de l'écrou peut être piloté et asservi grâce à cette mesure de tension mécanique, de manière à maîtriser la pré-tension de manière plus précise qu'en ayant recours à une simple mesure mécanique du couple de serrage appliqué.

Cette technique, connue dans la littérature en langue anglaise comme « Impedence Frequency Shift » (IFS) est décrite par exemple dans (Heyman 1977), (Smith 1980), (Joshi 1984), (Shao 2016) et (Dreisbach 2023).

Comme on peut le constater, cependant, les pics de l'impédance sont assez larges par rapport à leur espacement, ce qui fait qu'il est difficile de déterminer avec précision leur espacement et, par conséquent, la variation de longueur de l'élément de fixation. En pratique, il faut avoir recours à une analyse fréquentielle qui nécessite une acquisition sur plusieurs périodes - donc avec une bande spectrale large et un temps d'acquisition important.

Une technique concurrente à l'IFS est celle basée sur la mesure du temps de vol (TOF, de l'anglais « time-of-flight ») d'une onde acoustique. Comme dans le cas de l'IFS, un transducteur piézoélectrique est accolé à la structure et excité pour y générer des ondes acoustiques. Contrairement au cas de l'IFS, cependant, le transducteur est excité par une impulsion de tension générant une onde acoustique limitée dans le temps. L'onde se propage dans la structure en effectuant un aller-retour, avant de revenir vers le transducteur. Le transducteur est alors utilisé en tant que capteur en monitorant sa tension qui varie lorsque l'onde acoustique revient. La durée entre l'émission et la réception dépend de la vitesse de l'onde (obtenue par étalonnage préalable) et la longueur de la structure. Le TOF est une technique très connue et usitée dans l'état de l'art. Elle présente cependant un certain nombre d'inconvénients, notamment la nécessité d'utiliser une électronique rapide pour générer des impulsions brèves, et des impulsions de tension de l'ordre de quelques centaines de volts (contre des volts dans le cas de l'IFS).

L'invention vise à surmonter au moins en partie les inconvénients précités de l'art antérieur. Plus particulièrement elle vise à améliorer la précision et la sensibilité de la technique IFS sans en complexifier de manière notable la mise en œuvre.

Conformément à l'invention, ce but est atteint grâce à l'utilisation conjointe de deux transducteurs piézoélectriques couplés acoustiquement à travers la pièce mécanique dont la longueur doit être mesurée. L'ensemble constitué par les deux transducteurs couplés acoustiquement peut être modélisé par un quadripôle électrique, caractérisé par une matrice impédance Z. La mesure de l'élément hors diagonal $Z_{12}$ de cette matrice (ou d'un autre paramètre électrique proportionnel à cet élément) en fonction de la fréquence permet d'estimer une variation de longueur de la pièce mécanique, comme dans la technique d'IFS standard. L'avantage procuré par l'invention réside dans le fait que, comme cela sera montré plus loin, les pics d'impédance sont beaucoup plus prononcés et étroits que dans le cas conventionnel dans lequel un seul transducteur est utilisé.

Un objet de l'invention est donc un procédé de mesure d'une variation de dimension d'une pièce mécanique le long d'une direction dite longitudinale, comprenant les étapes consistant à :

    a) procurer au moins un premier et un deuxième transducteur piézoélectrique agencés à deux positions différentes le long de ladite direction longitudinale et couplés acoustiquement par l'intermédiaire de ladite pièce mécanique ;

    b) effectuer, à des temps différents, une pluralité de mesures électriques pour déterminer au moins une valeur d'un paramètre électrique dépendant d'un terme hors diagonal d'une matrice d'impédance d'un quadripôle électrique modélisant l'ensemble formé par le premier et le deuxième transducteur piézoélectrique couplés acoustiquement ; et

    c) déduire des résultats desdites mesures électriques ladite variation de dimension de la pièce mécanique.

Selon des modes de réalisation particuliers d'un tel procédé :

- Chaque dite mesure électrique de l'étape b) peut comprend les sous-étapes consistant à :

  b1) appliquer audit premier transducteur piézoélectrique un premier signal électrique d'excitation pour générer des ondes acoustiques se propageant dans la pièce mécanique en direction du deuxième transducteur, tout en maintenant le deuxième transducteur piézoélectrique en circuit ouvert, et mesurer en même temps l'impédance d'entrée dudit premier transducteur piézoélectrique ;
  b2) appliquer audit premier transducteur piézoélectrique un deuxième signal électrique d'excitation pour générer des ondes acoustiques se propageant dans la pièce mécanique en direction du deuxième transducteur, tout en maintenant le deuxième transducteur piézoélectrique en court-circuit, et mesurer en même temps l'impédance d'entrée dudit premier transducteur piézoélectrique ;
  b3) calculer la valeur dudit paramètre électrique à partir des impédances d'entrée ainsi mesurées ;
  l'ordre des sous-étapes b1) et b2) pouvant être inversé.

- Ledit paramètre électrique peut être la différence des phases des impédances d'entrée mesurées lors des sous-étapes b1) et b2).

- Le deuxième transducteur piézoélectrique peut comprendre deux bornes électriques reliées entre elle par une paire de diodes tête-bêche en parallèle, le premier signal d'excitation étant suffisamment faible pour que les ondes acoustiques générées induisent aux bornes dudit deuxième transducteur piézoélectrique une tension inférieure à un seuil desdites diodes, qui peuvent alors être assimilées à un circuit ouvert, et le deuxième signal d'excitation étant suffisamment fort pour que les ondes acoustiques générées induisent aux bornes dudit deuxième transducteur piézoélectrique une tension supérieure à un seuil desdites diodes, qui peuvent alors être assimilées à un court-circuit.

- L'étape b) peut comprendre la détermination de la valeur dudit paramètre en fonction de la fréquence.

- L'étape c) peut comprendre l'identification de pics de la valeur dudit paramètre électrique en fonction de la fréquence, la variation de dimension de la pièce mécanique étant déduite d'une variation de position desdits pics.

- Le premier et le deuxième transducteur piézoélectrique peuvent être agencés à deux extrémités opposées, selon ladite direction longitudinale, de la pièce mécanique.

Un autre objet de l'invention est l'utilisation d'un tel procédé pour la mesure du serrage d'une vis.

Encore un autre objet de l'invention est un système de mesure d'une variation de dimension d'une pièce mécanique le long d'une direction dite longitudinale, comprenant :

- un premier et un deuxième transducteur piézoélectrique, adaptés pour être fixés à deux positions différentes le long de ladite direction longitudinale et couplés acoustiquement par l'intermédiaire de ladite pièce mécanique ;
- un système électronique configuré pour déterminer au moins une valeur d'un paramètre électrique dépendant d'un terme hors diagonal d'une matrice d'impédance d'un quadripôle électrique modélisant l'ensemble formé par le premier et le deuxième transducteur piézoélectrique couplés acoustiquement ; et pour déduire d'une variation de ladite au moins une valeur dudit paramètre ladite variation de dimension de la pièce mécanique.

Selon des modes de réalisation particuliers :
Ledit système électronique peut comprendre comprend :

- un premier appareil électronique configuré pour appliquer audit premier transducteur piézoélectrique des signaux électriques d'excitation et mesurer en même temps son impédance d'entrée ;
- un deuxième appareil électronique configuré pour maintenir ledit deuxième transducteur piézoélectrique successivement en circuit ouvert et en court-circuit ; et

- un processeur configuré pour piloter au moins ledit premier appareil électronique de manière à :

  - appliquer audit premier transducteur piézoélectrique un premier signal électrique d'excitation pour générer des ondes acoustiques se propageant dans la pièce mécanique en direction du deuxième transducteur, tout en maintenant le deuxième transducteur piézoélectrique en circuit ouvert, et mesurer en même temps l'impédance d'entrée dudit premier transducteur piézoélectrique ;

- appliquer audit premier transducteur piézoélectrique un deuxième signal électrique d'excitation pour générer des ondes acoustiques se propageant dans la pièce mécanique en direction du deuxième transducteur, tout en maintenant le deuxième transducteur piézoélectrique en court-circuit, et mesurer en même temps l'impédance d'entrée dudit premier transducteur piézoélectrique ;
- calculer la valeur dudit paramètre électrique à partir des impédances d'entrée ainsi mesurées.
- L'appareil électronique peut être intégré à un système de serrage d'une vis, le premier et le deuxième transducteur piézoélectrique étant adaptés à être fixés à une dite vis.

D'autres caractéristiques, détails et avantages de l'invention ressortiront à la lecture de la description faite en référence aux dessins annexés donnés à titre d'exemple et dans lesquels :

[Fig.1], déjà décrite, illustre une technique de mesure de longueur d'une pièce mécanique (vis) par déphasage d'impédance selon l'art antérieur ;

[Fig. 2], déjà décrite, est un graphique illustrant le déphasage d'impédance à la base de la technique de la [Fig. 1] ;

[Fig. 3], déjà décrite, est un graphique illustrant la relation quasi-linéaire entre déphasage d'impédance et tension dans la technique de la [Fig. 1] ;

[Fig. 4] est le schéma fonctionnel d'un système de mesure selon un mode de réalisation de l'invention ;

[Fig. 5] illustre la modélisation d'un système de deux transducteurs piézoélectriques couplés acoustiquement par un quadripôle électrique ;

[Fig. 6], un graphique illustrant la variation en fonction de la fréquence de l'élément de matrice $Z_{11}$ ;

[fig. 7], [Fig. 8], [Fig. 9], [Fig. 10] et [Fig. 11], des graphiques illustrant la variation en fonction de la fréquence de différents paramètres fonction de $Z_{12}$ pouvant être utilisés dans la mise en œuvre de l'invention selon différents modes de réalisation ;

[Fig. 12] et [Fig. 13] sont des vues de détail de deux variantes du système de la [Fig. 4].

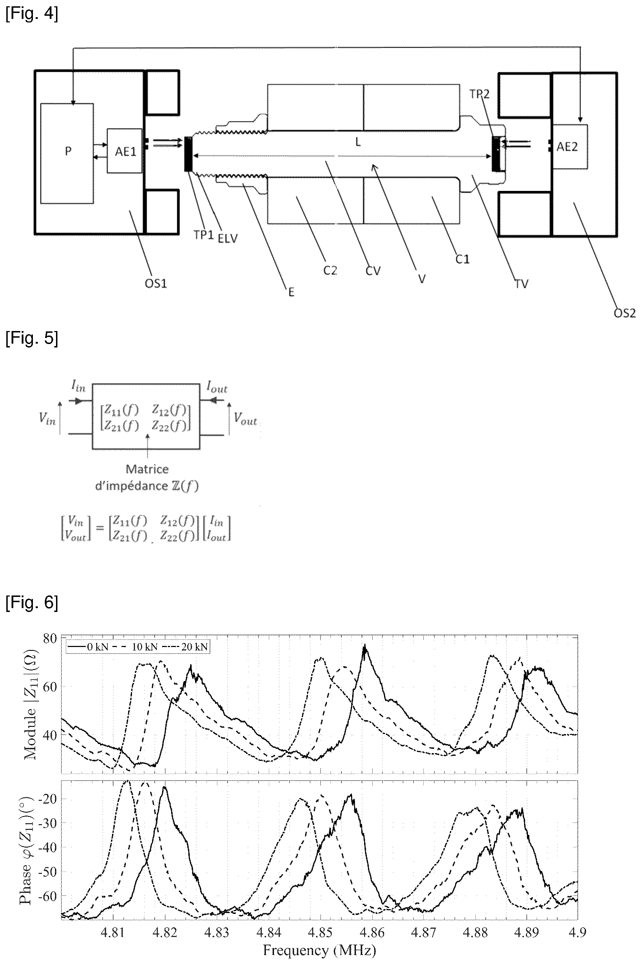

Dans le schéma de la [Fig. 4] la référence V désigne une vis, s'étendant dans une direction dite longitudinale x et présentant, dans cette direction, une longueur L. La vis V présente à une extrémité une tête TV pouvant coopérer avec un outil de serrage OS2 ; l'extrémité opposée ELV (extrémité libre), filetée, est introduite dans un écrou E, qui peut lui aussi coopérer avec un outil de serrage OS1. Deux composants mécaniques C1 et C2 sont traversés par le corps de vis CV et se retrouvent pris entre la tête TV et l'écrou E. En faisant tourner l'écrou avec l'outil de serrage OS1 tout en maintenant fixe la tête TV avec l'outil OS2, ou réciproquement, on met sous tension le corps de la vis, produisant un léger allongement de ce dernier.

Pour mesurer cet allongement, la vis V est équipée de deux transducteurs piézoélectriques TP1 et TP2, agencés respectivement au niveau de son extrémité libre ELV et de sa tête TV.

Les outils de serrage OS1 et OS2, qui forment conjointement un système de serrage, sont adaptés pour interagir avec un transducteur respectif par l'intermédiaire de contacts électriques. Plus particulièrement, dans le mode de réalisation de la [Fig. 4], le premier outil de serrage OS1 comprend un appareil premier électronique AE1 de type analyseur vectoriel de réseau, permettant d'exciter le premier transducteur piézoélectrique TP1 avec un signal électrique sinusoïdal de fréquence variable, et en même temps mesurer son impédance complexe. Le deuxième outil de serrage OS2 comprend à son tour un deuxième appareil électronique AE2 permettant d'exciter le premier transducteur piézoélectrique TP1 avec un signal électrique sinusoïdal de fréquence variable et/ou en même temps mesurer son impédance complexe, ou bien de lui appliquer une charge variable (par exemple, alternativement un court-circuit et un circuit ouvert). Un processeur P, par exemple intégré au premier outil de serrage, pilote les deux appareils électroniques et reçoit les mesures d'impédance effectuées par ces derniers.

Comme illustré sur la [Fig. 5], l'ensemble constitué par les deux transducteurs couplés acoustiquement par le corps de la vis V peut être modélisé par un quadripôle électrique, caractérisé par une matrice impédance Z, caractérisé par quatre éléments complexes fonctions de la fréquence : $Z_{11}(f)$, $Z_{12}(f)= Z_{21}(f)$, $Z_{22}(f)$. En désignant par $V_{in}$ la tension appliquée aux bornes du transducteur TP1, par $I_{in}$ le courant parcourant ledit transducteur, par $V_{out}$ la tension qui apparait aux bornes du transducteur TP2 et par $I_{out}$ le courant parcourant ce dernier, on a :

$$\begin{cases} V_{in} = Z_{11}I_{in} + Z_{12}I_{out} \\ V_{out} = Z_{12}I_{in} + Z_{22}I_{out} \end{cases} \tag{1}$$

Comme mentionné plus haut, une idée à la base de l'invention consiste à suivre la variation d'au moins un paramètre P fonction de $Z_{12}$ en déduire une mesure de variation de dimension de la pièce mécanique. Ce paramètre P peut être observé à une fréquence fixe ou sur un spectre de fréquence. De même la fréquence correspondante à une valeur fixe de ce paramètre P peut être suivie dans le temps.

Le suivi d'un paramètre P fonction de $Z_{12}$, au lieu de l'impédance d'un transducteur unique, présente plusieurs avantages. Un tel paramètre peut en effet présenter des variations plus importantes en terme de module et en terme de phase (qui varie de -180° à +180°) et, dans certains cas, des pics étroits ou des variations brusques, facilement identifiables. De plus, $Z_{12}$ est principalement lié au chemin direct entre les deux transducteurs, ce qui permet de s'affranchir d'ondes stationnaires qui pourraient s'établir avec d'autres surfaces dans le cas d'un transducteur unique.

La [Fig. 6], donnée à titre de référence, illustre l'évolution du module (panneau supérieur) et de la phase (panneau inférieur) pour trois valeurs de tension de la vis : 0 kN (repos), 10 kN et 20 kN.

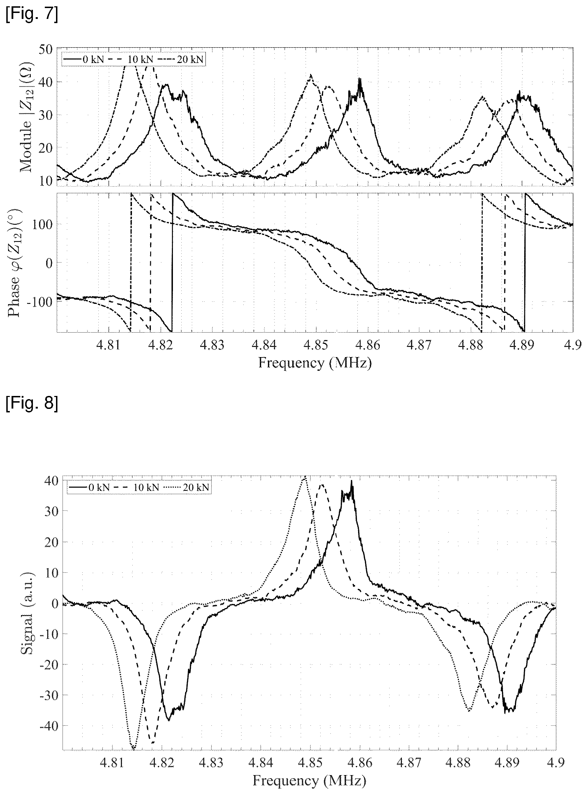

La [Fig. 7] illustre l'évolution, dans les mêmes conditions, du paramètre $Z_{12}$. On remarque la plus grande amplitude d'évolution relative du module, et le fait que la phase varie entre -180° et +180°, à comparer à une variation d'environ 60° pour celle de $Z_{11}$.

La [Fig. 8] illustre l'évolution, dans les mêmes conditions, de la partie réelle de $Z_{12}$. On constate la présence de pics étroits, dont le déplacement avec la tension peut être suivi par des algorithmes de détection du maximum.

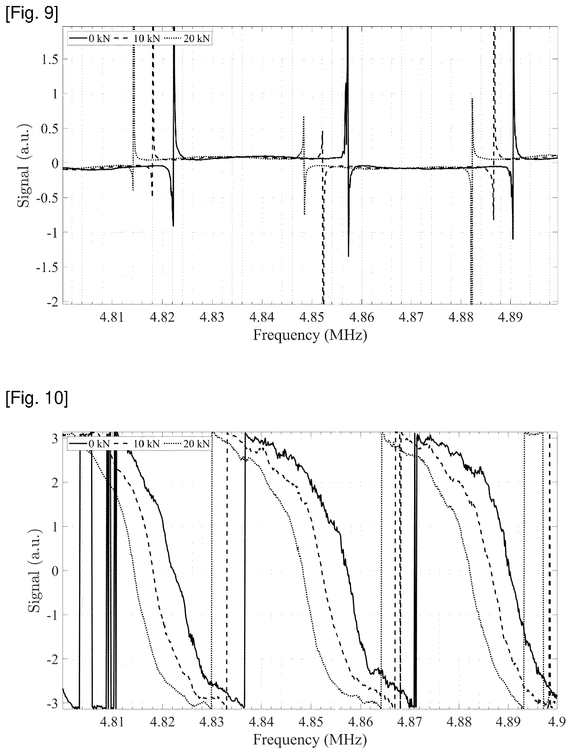

La [Fig. 9] illustre l'évolution, dans les mêmes conditions, de la partie imaginaire de $Z_{12}$. Ce paramètre se maintient proche de zéro sur une large partie de la plage fréquentielle d'intérêt, mais présente des variations brusques en correspondance des fréquences de résonance. Ces variations peuvent être détectées par des algorithmes de retournement du signal.

La [Fig. 10] illustre l'évolution, dans les mêmes conditions, de la phase $arg \dfrac{Z_{12}^2}{Z_{22}Z_{22}}$. On remarque des variations importantes, qui peuvent être suivies par des algorithmes de passage par zéro, par exemple.

Un mode de réalisation particulièrement intéressant est celui dans lequel l'excitation et la mesure d'impédance se font d'un seul côté, par exemple celui de TP1. Dans ce cas, le deuxième appareil électronique se limite à maintenir le deuxième transducteur TP2 alternativement en court-circuit et en circuit ouvert.

Lorsque AP2 maintient le transducteur TP2 en court-circuit, on a $V_{out}=0$. L'équation (1) devient donc

$$\begin{cases} V_{in} = Z_{11}I_{in} + Z_{12}I_{out} \\ 0 = Z_{12}I_{in} + Z_{22}I_{out} \Rightarrow I_{out} = -\frac{Z_{12}}{Z_{22}}I_{in} \end{cases} \Rightarrow V_{in} = \left(Z_{11} - \frac{Z_{12}^2}{Z_{22}}\right)I_{in} = Z_{11}(1 - \zeta^2)I_{in} \tag{2}$$

avec $\zeta = \dfrac{Z_{12}}{\sqrt{Z_{11}Z_{22}}}$. L'impédance d'entrée mesurée en conditions de court-circuit $Z_{in}{}^{cc} = \dfrac{V_{in}}{I_{in}}\Big|_{V_{out}=0}$ vaut donc

$$Z_{in}{}^{cc} = Z_{11}(1 - \zeta). \tag{3}$$

Lorsque AP2 maintient le transducteur TP2 en circuit ouvert, on a $I_{out}=0$. L'équation (1) devient donc

$$\begin{cases} V_{in} = Z_{11}I_{in} \\ V_{out} = Z_{12}I_{in} \end{cases} \tag{4}$$

L'impédance d'entrée mesurée en conditions de circuit ouvert $Z_{in}{}^{co} = \dfrac{V_{in}}{I_{in}}\Big|_{I_{out}=0}$ vaut donc tout simplement

$$Z_{in}{}^{co} = Z_{11} \qquad (5)$$

En calculant la différence entre les valeurs de l'impédance on trouve

$$\Delta Z_{in} = Z_{in}{}^{co} - Z_{in}{}^{cc} = Z_{11}\zeta^2 = Z_{11}\frac{Z_{12}{}^2}{Z_{11}Z_{22}} = \frac{Z_{12}{}^2}{Z_{22}}. \qquad (6)$$

On définit également

$$\left| \Delta |Z_{in}| \right| = \left| |Z_{in}{}^{co}| - |Z_{in}{}^{co}| \right| \qquad (7)$$

et

$$\Delta \arg (Z_{in}) = arg(Z_{in}{}^{co}) - arg(Z_{in}{}^{cc}) \qquad (8)$$

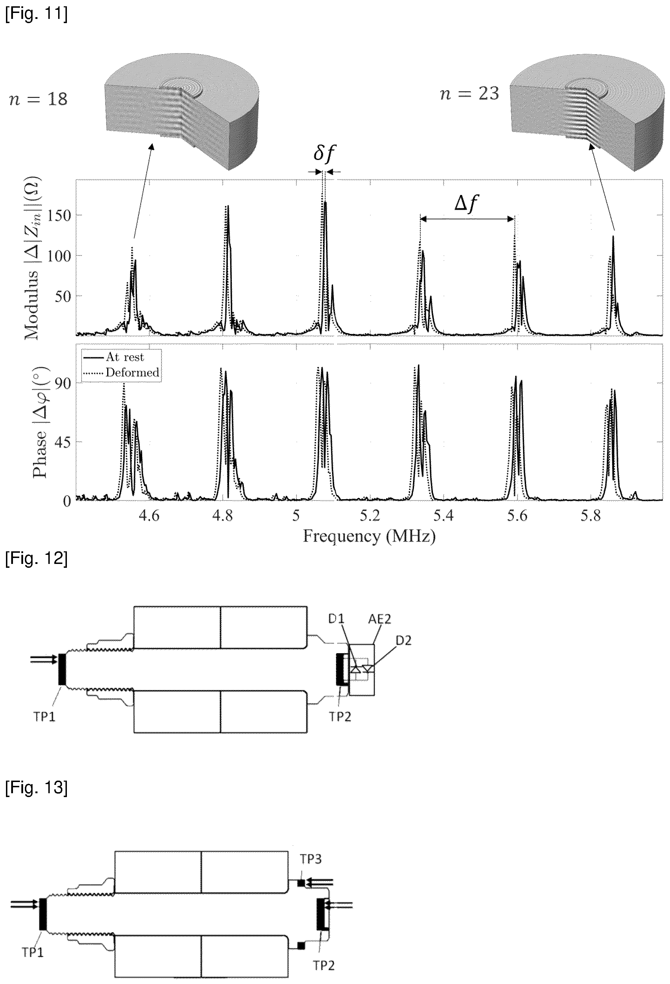

La [Fig. 11] montre des graphiques de $|\Delta|Z_{in}||$ (partie supérieure) et de $|\Delta \arg (Z_{in})|$ (partie inférieure) en fonction de la fréquence. On peut constater que les pics - qui correspondent aux fréquences de résonance permettant l'établissement d'ondes acoustiques stationnaires dans le corps de la vis - sont beaucoup plus étroits que dans les cas de la [Fig. 2] et de la [Fig. 6] ; leur position peut donc être déterminée de manière beaucoup plus précise. Plus particulièrement, sur la [Fig. 11] la courbe en trait continu correspond à un corps de vis de longueur $L_0$=1 cm à repos et la courbe pointillée au même corps de vis étiré de 0,25% (L=1,0036 cm).

On note $\Delta f$ la périodicité en fréquence de ces pics de résonance et $\delta f$ la variation de leur position suite à une variation de longueur de la vis.

La longueur d'onde d'une onde acoustique de fréquence $f$ est donnée par $\lambda = \frac{c}{f}$, avec c la célérité de l'onde. La condition pour obtenir l'onde stationnaire est donnée par : $n\lambda = 2L$, où L est la longueur de la vis (la demi-longueur d'onde et la longueur sont multiples). Ce qui donne pour les fréquences de résonance $f = \frac{n}{2}\frac{c}{L}$ avec n entier. La [Fig. 11] montre des ondes stationnaires pour n=18 et n=21, et identifie les pics correspondants d'impédance $Z_{in}$. La distance entre les pics est donc donnée par $\Delta f = \frac{1}{2}\frac{c}{L}$.

Les positions des pics f et leur écart $\Delta f$ varient avec l'allongement $\Delta L = \varepsilon L$.

La vitesse du son dans un milieu homogène est donnée, en première approximation (en négligeant l'effet acousto-élastique) par : $c = \sqrt{\frac{E}{\rho}\frac{1-\nu}{(1+\nu)(1-2\nu)}}$, où E est le module d'Young du matériau de la vis, $\nu$ son coefficient de Poisson et $\rho$ sa densité, qui varie elle aussi en fonction de l'allongement (alors que le module d'Young et le coefficient de Poisson sont considérés constants en première approximation). La variation de volume et donc de densité avec la déformation est donnée par : $\frac{\Delta V}{V_0} = -\frac{\Delta \rho}{\rho_0} = (1 - 2\nu)$, où $V_0$ et $\rho_0$ sont, respectivement, le volume et la densité à repos. On trouve que les fréquences de résonance au repos sont données par $f_0^n = \frac{n}{2}\frac{c_0}{L_0} = n\Delta f_0$, où n est un indice à valeurs entières, $c_0$ la célérité du son dans la vis au repos et $\Delta f_0$ l'espacement entre les pics de résonance au repos. En conditions en étirement, les fréquences de résonance varient tel que :

$$\frac{f}{f_0} = \frac{1}{(1+\varepsilon)\sqrt{(1-(1-2\nu)\varepsilon)}} = 1 - \frac{1+2\nu}{2}\varepsilon + o(\varepsilon^2) \sim 1 - 0{,}79\varepsilon \qquad (7)$$

pour un acier avec $\nu=0{,}29$. Finalement, la variation des pics de fréquence est donnée par :

$$\frac{\delta f}{f_0} \sim -\frac{1+2\nu}{2}\varepsilon \qquad (8)$$

Et

$$\Delta f = \left(1 - \frac{1+2\nu}{2}\varepsilon\right)\Delta f_0. \qquad (9)$$

On trouve bien une relation linéaire entre les variations de position des pics d'impédance et la variation de longueur de la vis (cette dernière étant elle-même directement proportionnelle à la tension appliquée, tant que la limite d'élasticité linéaire n'est pas franchie).

La [Fig. 12] illustre un mode de réalisation particulier dans lequel le deuxième appareil électronique AE2 est simplement constitué par deux diodes D1 et D2 montés tête-bêche en parallèle. Lorsque la tension $V_{out}$ générée par le transducteur TP2 est inférieure à la tension de seuil des diodes, ce montage se comporte comme un circuit ouvert, tandis que lorsque $V_{out}$ est très supérieure au seuil il se comporte comme un court-circuit. Il est donc possible d'effectuer les deux types de mesures - en circuit ouvert et en court-circuit - simplement en variant l'amplitude du signal d'excitation du premier transducteur TP1. L'avantage de ce mode de réalisation est que le deuxième appareil électronique AE2 est entièrement passif, et seul l'outil de serrage OS1 doit être équipé de contacts électriques et d'électronique haute fréquence. Cet appareil AE2 peut même être encapsulé avec le transducteur TP2 et placé à demeure, auquel cas il n'est pas nécessaire d'avoir accès à la tête de la vis.

La [Fig. 13] illustre encore un autre mode de réalisation dans lequel un troisième transducteur piézoélectrique TP3 est agencé sur une collerette de la tête de vis TV. Ceci permet par exemple de déterminer une variation de longueur entre TP1 et TP2 (majoritairement liée à la déformation de la vis et donc à l'effort appliqué) et une variation de longueur entre TP2 et TP3 (majoritairement lié à une variation de température de la vis).

L'invention a été décrite en référence à des modes de réalisation particulier, mais des variantes sont possibles. Par exemple :

- Le fait d'effectuer des mesures en excitant uniquement TP1 et en changeant l'état de TP2 (circuit ouvert / court-circuit) est un choix avantageux, mais pas univoque. Il serait également possible, par exemple, d'exciter TP1 et effectuer une mesure de tension ou de courant au niveau de TP2, ou inversement. L'essentiel est d'effectuer des mesures permettant d'accéder à un paramètre électrique dépendant du terme hors diagonal $Z_{12}$ de la matrice d'impédance du quadripôle électrique modélisant le système formé par les capteurs piézoélectriques couplés.

- Le paramètre d'intérêt est typiquement complexe. On pourra alors prendre en compte sa phase (choix préféré pour des raisons de robustesse), son module, sa partie réelle, sa partie imaginaire ou toute combinaison de ces valeurs.

- Au lieu d'un signal d'excitation sinusoïdal de fréquence variable (de manière continue ou par paliers) il est possible d'utiliser un signal comprenant plusieurs composantes fréquentielles à la fois, par exemple un signal impulsionnel. Cela permet d'accélérer la mesure de variation de longueur, au prix d'une électronique plus complexe, en mesure de générer et traiter des impulsions intenses.

- Au lieu de déterminer dépendance fréquentielle du paramètre, il est possible de mesurer la valeur du paramètre d'intérêt à une seule fréquence, et déduire une variation de longueur de la pièce mécanique d'une variation de cette valeur.

La structure du système de serrage peut être différente de celle de la [Fig. 4]. Par exemple, il n'est pas essentiel que le processeur P soit intégré dans un outil OS1. Le processeur peut d'ailleurs être réalisé à partir d'un microprocesseur, d'un ASIC voire d'un FPGA. Il est possible d'avoir deux processeurs distincts pour piloter l'appareil électronique EA (et, si nécessaire, le dispositif électronique DE) et pour calculer la variation de longueur de la pièce à partir des mesures électriques acquises.

Dans l'exemple de la [Fig. 4] et dans celui de la [Fig. 12], c'est le transducteur situé du côté de l'extrémité libre de la vis qui est excité, et celui du côté de la tête qui est « passif ». Le choix inverse est également possible. Les transducteurs peuvent d'ailleurs être agencés à des endroits différents.

La pièce dont on mesure une variation de longueur ne doit pas nécessairement être une vis, ni même un élément de fixation. Il peut s'agir de tout élément mécanique permettant l'établissement d'ondes acoustiques stationnaires et auquel peuvent être fixés ou accolés des transducteurs piézoélectriques. La variation de longueur (plus généralement, dimension) à mesurer ne doit pas nécessairement être provoquée par une contrainte mécanique : il peut également s'agit, par exemple, d'une dilatation thermique ou de l'effet d'une corrosion.

Références

(Heyman 1977): J.S. Heyman, "A CW Ultrasonic Bolt-strain Monitor", Experimental Mechanics (1977)

(Smith 1980): J. F.Smith and J. D. Greiner, "Stress Measurement and Bolt Tensioning by Ultrasonic Methods", Journal of Metals (1980)

(Joshi 1984): S. G. Joshi and R. G. Pathare, "Ultrasonic instrument for measuring bolt stress", Ultrasonics (1984)

(Shao 2016): J. Shao et al., "Bolt Looseness Detection Based on Piezoelectric Impedance Frequency Shift", Applied Sciences, vol. 6 (2016)

(Dreisbach 2023): A.-L. Dreisbach and C.-P. Fritzen "A Novel Approach for Preload Monitoring in Bolted Connections Using Electro-Mechanical Impedence Spectra" Lecture Notes in Civil Engineering 254, Springer (2023).

**Revendications**

**1.** Procédé de mesure d'une variation de dimension (L) d'une pièce mécanique (V) le long d'une direction (x) dite longitudinale, comprenant les étapes consistant à :

a) procurer au moins un premier (TP1) et un deuxième (TP2) transducteur piézoélectrique agencés à deux positions différentes (ELV, TV) le long de ladite direction longitudinale et couplés acoustiquement par l'intermédiaire de ladite pièce mécanique ;
b) effectuer, à des temps différents, une pluralité de mesures électriques pour déterminer au moins une valeur d'un paramètre électrique dépendant d'un terme hors diagonal ($Z_{12}$) d'une matrice d'impédance d'un quadripôle électrique modélisant l'ensemble formé par le premier et le deuxième transducteur piézoélectrique couplés acoustiquement ; et
c) déduire des résultats desdites mesures électriques ladite variation de dimension de la pièce mécanique.

**2.** Procédé selon la revendication 1 dans lequel chaque dite mesure électrique de l'étape b) comprend les sous-étapes consistant à :

b1) appliquer audit premier transducteur piézoélectrique (TP1) un premier signal électrique d'excitation pour générer des ondes acoustiques se propageant dans la pièce mécanique en direction du deuxième transducteur (TP2), tout en maintenant le deuxième transducteur piézoélectrique en circuit ouvert, et mesurer en même temps l'impédance d'entrée dudit premier transducteur piézoélectrique ;
b2) appliquer audit premier transducteur piézoélectrique (TP1) un deuxième signal électrique d'excitation pour générer des ondes acoustiques se propageant dans la pièce mécanique en direction du deuxième transducteur (TP2), tout en maintenant le deuxième transducteur piézoélectrique en court-circuit, et mesurer en même temps l'impédance d'entrée dudit premier transducteur piézoélectrique ;
b3) calculer la valeur dudit paramètre électrique à partir des impédances d'entrée ainsi mesurées ;
l'ordre des sous-étapes b1) et b2) pouvant être inversé.

**3.** Procédé selon la revendication 2 dans lequel ledit paramètre électrique est la différence des phases des impédances d'entrée mesurées lors des sous-étapes b1) et b2).

4. Procédé selon l'une des revendications 2 et 3 dans lequel le deuxième transducteur piézoélectrique (TP2) comprend deux bornes électriques reliées entre elle par une paire de diodes (D1, D2) tête-bêche en parallèle, le premier signal d'excitation étant suffisamment faible pour que les ondes acoustiques générées induisent aux bornes dudit deuxième transducteur piézoélectrique une tension inférieure à un seuil desdites diodes, qui peuvent alors être assimilées à un circuit ouvert, et le deuxième signal d'excitation étant suffisamment fort pour que les ondes acoustiques générées induisent aux bornes dudit deuxième transducteur piézoélectrique une tension supérieure à un seuil desdites diodes, qui peuvent alors être assimilées à un court-circuit.

5. Procédé selon l'une des revendications 1 à 4 dans lequel l'étape b) comprend la détermination de la valeur dudit paramètre en fonction de la fréquence.

6. Procédé selon la revendication 5 dans lequel l'étape c) comprend l'identification de pics de la valeur dudit paramètre électrique en fonction de la fréquence, la variation de dimension de la pièce mécanique étant déduite d'une variation de position desdits pics.

7. Procédé selon l'une des revendications précédentes dans lequel le premier (TP1) et le deuxième (TP2) transducteur piézoélectrique sont agencés à deux extrémités opposées (ELV, TV), selon ladite direction longitudinale, de la pièce mécanique.

8. Utilisation d'un procédé selon l'une des revendications précédentes pour la mesure du serrage d'une vis.

9. Système de mesure d'une variation de dimension (L) d'une pièce mécanique (V) le long d'une direction dite longitudinale (x), comprenant :

   - un premier (TP1) et un deuxième (TP2) transducteur piézoélectrique, adaptés pour être fixés à deux positions différentes (ELV, TV) le long de ladite direction longitudinale et couplés acoustiquement par l'intermédiaire de ladite pièce mécanique ;
   - un système électronique (AE1, AE2, P) configuré pour déterminer au moins une valeur d'un paramètre électrique dépendant d'un terme hors diagonal ($Z_{12}$) d'une matrice d'impédance d'un quadripôle électrique modélisant l'ensemble formé par le premier et le deuxième transducteur piézoélectrique couplés acoustiquement ; et pour déduire d'une variation de ladite au moins une valeur dudit paramètre ladite variation de dimension de la pièce mécanique.

10. Système de mesure selon la revendication 9 dans lequel ledit système électronique comprend :

    - un premier appareil électronique (AE1) configuré pour appliquer audit premier transducteur piézoélectrique des signaux électriques d'excitation et mesurer en même temps son impédance d'entrée ;
    - un deuxième appareil électronique (AE2) configuré pour maintenir ledit deuxième transducteur piézoélectrique successivement en circuit ouvert et en court-circuit ; et
    - un processeur (P) configuré pour piloter au moins ledit premier appareil électronique de manière à :

      - appliquer audit premier transducteur piézoélectrique (TP1) un premier signal électrique d'excitation pour générer des ondes acoustiques se propageant dans la pièce mécanique en direction du deuxième transducteur, tout en maintenant le deuxième transducteur piézoélectrique (TP2) en circuit ouvert, et mesurer en même temps l'impédance d'entrée dudit premier transducteur piézoélectrique ;

      - appliquer audit premier transducteur piézoélectrique (TP1) un deuxième signal électrique d'excitation pour générer des ondes acoustiques se propageant dans la pièce mécanique en direction du deuxième transducteur, tout en maintenant le deuxième transducteur piézoélectrique (TP2) en court-circuit, et mesurer en même temps l'impédance d'entrée dudit premier transducteur piézoélectrique ;
      - calculer la valeur dudit paramètre électrique à partir des impédances d'entrée ainsi mesurées.

11. Système de mesure selon l'une des revendications 9 et 10 dans lequel l'appareil électronique est intégré à un système de serrage d'une vis (OS1, OS2), le premier et le deuxième transducteur piézoélectrique étant adaptés à être fixés à une dite vis.

**Patentansprüche**

1. Verfahren zur Messung einer Abmessungsänderung (L) eines mechanischen Teils (V) entlang einer Längsrichtung (x), umfassend die Schritte bestehend aus:

   a) Bereitstellen von mindestens einem ersten (TP1) und einem zweiten (TP2) piezoelektrischen Transducer, die an zwei unterschiedlichen Positionen (ELV, TV) entlang der Längsrichtung angeordnet und mittels des mechanischen Teils akustisch gekoppelt sind;
   b) Durchführen, zu unterschiedlichen Zeitpunkten, einer Vielzahl von elektrischen Messungen zum Bestimmen mindestens eines Wertes eines elektrischen Parameters, der von einem Term ($Z_{12}$) außerhalb der Diagonalen einer Impedanzmatrix eines elektrischen Quadrupols abhängt, die die Anordnung modelliert, die aus dem ersten und dem zweiten piezoelektrischen Transducer, die akustisch gekoppelt sind, gebildet wird; und
   c) Ableiten der Abmessungsänderung des mechanischen Stücks aus den Ergebnissen der elektrischen Messungen.

2. Verfahren nach Anspruch 1, wobei die elektrische Messung des Schritts b) die Teilschritte umfasst bestehend aus:

   b1) Anlegen eines ersten elektrischen Anregungssignals an den ersten piezoelektrischen Transducer (TP1), um akustische Wellen zu erzeugen, die sich in dem mechanischen Stück in Richtung des zweiten Transducers (TP2) ausbreiten, während der zweite piezoelektrische Transducer im offenen Stromkreis gehalten wird, und gleichzeitiges Messen der Eingangsimpedanz des ersten piezoelektrischen Transducers;
   b2) Anlegen eines zweiten elektrischen Anregungssignals an den ersten piezoelektrischen Transducer (TP1), um akustische Wellen zu erzeugen, die sich in dem mechanischen Stück in Richtung des zweiten Transducers (TP2) ausbreiten, während der zweite piezoelektrische Transducer im Kurzschluss gehalten wird, und gleichzeitiges Messen der Eingangsimpedanz des ersten piezoelektrischen Transducers;
   b3) Berechnen des Wertes des elektrischen Parameters ausgehend von den somit gemessenen Eingangsimpedanzen;
   wobei die Reihenfolge der Teilschritte b1) und b2) umgekehrt werden kann.

3. Verfahren nach Anspruch 2, wobei der elektrische Parameter die Phasendifferenz der gemessenen Eingangsimpedanzen bei den Teilschritten b1) und b2) ist.

4. Verfahren nach einem der Ansprüche 2 und 3, wobei der zweite piezoelektrische Transducer (TP2) zwei durch ein Diodenpaar (D1, D2) untereinander parallel und in entgegengesetzter Richtung verbundene elektrische Anschlüsse umfasst, wobei das erste Anregungssignal ausreichend schwach ist, damit die erzeugten akustischen Wellen an den Anschlüssen des zweiten piezoelektrischen Transducers eine Spannung induzieren, die kleiner als ein Schwellenwert der Dioden ist, die dann einem offenen Stromkreis gleichgesetzt werden können, und das zweite Anregungssignal ausreichend stark ist, damit die erzeugten akustischen Wellen an den Anschlüssen des zweiten piezoelektrischen Transducers eine Spannung induzieren, die größer als ein Schwellenwert der Dioden ist, die dann einem Kurzschluss gleichgesetzt werden können.

5. Verfahren nach einem der Ansprüche 1 bis 4, wobei der Schritt b) die Bestimmung des Wertes des Parameters als Funktion der Frequenz umfasst.

6. Verfahren nach Anspruch 5, wobei der Schritt c) die Identifikation von Peaks des Werts des elektrischen Parameters als Funktion der Frequenz umfasst, wobei die Abmessungsänderung des mechanischen Teils von einer Änderung der Position der Peaks abgeleitet wird.

7. Verfahren nach einem der vorstehenden Ansprüche, wobei der erste (TP1) und der zweite (TP2) piezoelektrische Transducer an zwei gegenüberliegenden Enden (ELV, TV) nach der Längsrichtung des mechanischen Stücks angeordnet sind.

8. Verwendung eines Verfahrens nach einem der vorstehenden Ansprüche für die Messung der Verschraubung einer Schraube.

9. System zur Messung einer Abmessungsänderung (L) eines mechanischen Teils (V) entlang einer Längsrichtung (x), umfassend:

- einen ersten (TP1) und einen zweiten (TP2) piezoelektrischen Transducer, die angepasst sind, um an zwei unterschiedlichen Positionen (ELV, TV) entlang der Längsrichtung befestigt und mittels des mechanischen Teils akustisch gekoppelt zu werden;

- ein elektronisches System (AE1, AE2, P), konfiguriert zum Bestimmen mindestens eines Wertes eines elektrischen Parameters, der von einem Term ($Z_{12}$) außerhalb der Diagonalen einer Impedanzmatrix eines elektrischen Quadrupols abhängt, die die Anordnung modelliert, die aus dem ersten und dem zweiten piezoelektrischen Transducer, die akustisch gekoppelt sind, gebildet wird; und zum Ableiten einer Änderung des mindestens einen Wertes des Parameters, der Abmessungsänderung des mechanischen Stücks.

**10.** System zur Messung nach Anspruch 9, wobei das elektronische System Folgendes umfasst:

- ein erstes elektronisches Gerät (AE1), konfiguriert zum Anlegen von elektrischen Anregungssignalen an den ersten piezoelektrischen Transducer und zum gleichzeitigen Messen seiner Eingangsimpedanz;
- ein zweites elektronisches Gerät (AE2), konfiguriert zum Halten des zweiten piezoelektrischen Transducers nacheinander im offenen Stromkreislauf und im Kurzschluss; und
- einen Prozessor (P), konfiguriert zum Steuern mindestens des ersten elektronischen Geräts auf eine Weise zum:

- Anlegen eines ersten elektrischen Anregungssignals an den ersten piezoelektrischen Transducer (TP1), um akustische Wellen zu erzeugen, die sich in dem mechanischen Stück in Richtung des zweiten Transducers ausbreiten, während der zweite piezoelektrische Transducer (TP2) im offenen Stromkreis gehalten wird, und gleichzeitiges Messen der Eingangsimpedanz des ersten piezoelektrischen Transducers;

- Anlegen eines zweiten elektrischen Anregungssignals an den ersten piezoelektrischen Transducer (TP1), um akustische Wellen zu erzeugen, die sich in dem mechanischen Stück in Richtung des zweiten Transducers ausbreiten, während der zweite piezoelektrische Transducer (TP2) im Kurzschluss gehalten wird, und gleichzeitiges Messen der Eingangsimpedanz des ersten piezoelektrischen Transducers;
- Berechnen des Wertes des elektrischen Parameters ausgehend von den somit gemessenen Eingangsimpedanzen.

**11.** System zur Messung nach einem der Ansprüche 9 und 10, wobei das elektronische Gerät mit einem System zur Verschraubung einer Schraube (OS1, OS2) integriert ist, wobei der erste und der zweite piezoelektrische Transducer angepasst sind, um an einer Schraube befestigt zu werden.

**Claims**

**1.** A method for measuring a dimension variation (L) of a mechanical component (V) in a direction (x) referred to as the longitudinal direction, comprising the steps consisting of:

a) obtaining at least a first (TP1) and a second (TP2) piezoelectric transducer which are arranged at two different positions (ELV, TV) in said longitudinal direction and which are coupled acoustically by means of said mechanical component;
b) carrying out, at different times, a plurality of electrical measurements in order to determine at least one value of an electrical parameter which is dependent on an off-diagonal term ($Z_{12}$) of an impedance matrix of an electrical quadrupole which models the group formed by the first and the second piezoelectric transducer which are acoustically coupled; and
c) deriving from the results of said electrical measurements said dimension variation of the mechanical component.

**2.** Method according to claim 1, wherein each said electrical measurement of step b) comprises the sub-steps consisting of:

b1) applying to said first piezoelectric transducer (TP1) a first electrical excitation signal in order to generate sound waves which propagate in the mechanical component in the direction of the second transducer (TP2), whilst maintaining the second piezoelectric transducer in an open circuit, and measuring at the same time the input impedance of said first piezoelectric transducer;
b2) applying to said first piezoelectric transducer (TP1) a second electrical excitation signal in order to generate sound waves which propagate in the mechanical component in the direction of the second transducer (TP2), whilst maintaining the second piezoelectric transducer in a short-circuit, and measuring at the same time the input impedance of said first piezoelectric transducer;

b3) calculating the value of said electrical parameter from the input impedances measured in this manner; the order of the sub-steps b1) and b2) being able to be reversed.

3. Method according to claim 2, wherein said electrical parameter is the difference of the input impedance phases measured during sub-steps b1) and b2).

4. Method according to either of claims 2 and 3, wherein the second piezoelectric transducer (TP2) comprises two electrical terminals which are connected to each other by means of a pair of diodes (D1, D2) which are arranged head-to-tail in parallel, the first excitation signal being sufficiently weak for the sound waves generated to bring about at the terminals of said second piezoelectric transducer a voltage less than a threshold of said diodes, which may then be likened to an open circuit, and the second excitation signal being sufficiently strong for the sound waves generated to bring about at the terminals of said second piezoelectric transducer a voltage greater than a threshold of said diodes, which may then be likened to a short-circuit.

5. Method according to any one of claims 1 to 4, wherein step b) comprises the determination of the value of said parameter as a function of the frequency.

6. Method according to claim 5, wherein step c) comprises the identification of peaks of the value of said electrical parameter as a function of the frequency, the dimension variation of the mechanical component being derived from a position variation of said peaks.

7. The method according to any one of the preceding claims, wherein the first (TP1) and the second (TP2) piezoelectric transducer are arranged at two opposing ends (ELV, TV) in said longitudinal direction of the mechanical component.

8. Use of a method according to any one of the preceding claims for measuring the tightening of a screw.

9. System for measuring a dimension variation (L) of a mechanical component (V) in a direction (x) referred to as the longitudinal direction, comprising:

- a first (TP1) and a second (TP2) piezoelectric transducer which are capable of being fixed at two different positions (ELV, TV) in said longitudinal direction and which are coupled acoustically by means of said mechanical component;
- an electronic system (AE1, AE2, P) which is configured to determine at least one value of an electrical parameter which is dependent on an off-diagonal term ($Z_{12}$) of an impedance matrix of an electrical quadrupole which models the group formed by the first and the second piezoelectric transducer which are acoustically coupled; and in order to derive from a variation of said at least one value of said parameter said dimension variation of the mechanical component.

10. Measurement system according to claim 9, wherein said electronic system comprises:

- a first electronic apparatus (AE1) which is configured to apply electrical excitation signals to said first piezoelectric transducer and at the same time to measure its input impedance;
- a second electronic apparatus (AE2) which is configured to maintain said second piezoelectric transducer successively in an open circuit and in a short-circuit; and
- a processor (P) which is configured to control at least said first electronic apparatus in order:

    - to apply to said first piezoelectric transducer (TP1) a first electrical excitation signal in order to generate sound waves which propagate in the mechanical component in the direction of the second transducer, whilst maintaining the second piezoelectric transducer (TP2) in an open circuit, and to measure at the same time the input impedance of said first piezoelectric transducer;

    - to apply to said first piezoelectric transducer (TP1) a second electrical excitation signal in order to generate sound waves which propagate in the mechanical component in the direction of the second transducer, whilst maintaining the second piezoelectric transducer (TP2) in a short-circuit, and to measure at the same time the input impedance of said first piezoelectric transducer;

- to calculate the value of said electrical parameter from the input impedances measured in this manner.

11. Measurement system according to either of claims 9 and 10, wherein the electronic apparatus is integrated in a screw tightening system (OS1, OS2), the first and the second piezoelectric transducer being capable of being fixed to a said screw.

[Fig. 1]

[Fig. 2]

[Fig. 3]

[Fig. 4]

[Fig. 5]

Matrice
d'impédance $\mathbb{Z}(f)$

$$\begin{bmatrix} V_{in} \\ V_{out} \end{bmatrix} = \begin{bmatrix} Z_{11}(f) & Z_{12}(f) \\ Z_{21}(f) & Z_{22}(f) \end{bmatrix} \begin{bmatrix} I_{in} \\ I_{out} \end{bmatrix}$$

[Fig. 6]

[Fig. 7]

[Fig. 8]

[Fig. 9]

[Fig. 10]

[Fig. 11]

[Fig. 12]

[Fig. 13]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. F.SMITH** ; **J. D. GREINER**. Stress Measurement and Bolt Tensioning by Ultrasonic Methods. *Journal of Metals*, 1980
- **S. G. JOSHI** ; **R. G. PATHARE**. Ultrasonic instrument for measuring bolt stress. *Ultrasonics*, 1984
- **J. SHAO et al.** Bolt Looseness Detection Based on Piezoelectric Impedance Frequency Shift. *Applied Sciences*, 2016, vol. 6

- A Novel Approach for Preload Monitoring in Bolted Connections Using Electro-Mechanical Impedance Spectra. **A.-L. DREISBACH** ; **C.-P. FRITZEN**. Lecture Notes in Civil Engineering. Springer, 2023, vol. 254